# EUROPÄISCHE PATENTSCHRIFT

(11) **EP 4 606 506 B1**
(45) Veröffentlichungstag und Bekanntmachung des Hinweises auf die Patenterteilung: **01.04.2026**
(21) Anmeldenummer: 24159795.4
(22) Anmeldetag: 26.02.2024
(51) Int. Cl.: B23F 23/00, B23F 23/08, B23F 23/12, G05B 19/402, G05B 19/18, B23F 1/02, B23F 5/04

(54) **ADAPTIVES EINMITTEN**
ADAPTIVE CENTERING
CENTRAGE ADAPTATIF

(43) Veröffentlichungstag der Anmeldung: 27.08.2025
(73) Patentinhaber: Klingelnberg AG, 8050 Zürich (CH)
(72) Erfinder: Kienzle, Florian, 71696 Möglingen (DE); Burkart, Ruben, 76287 Rheinstetten (DE)
(74) Vertreter: Janke Scholl Patentanwälte PartG mbB

(56) Entgegenhaltungen:
- DE-B3- 102011 077 231
- US-A1- 2022 291 669

## Beschreibung

Die vorliegende Erfindung betrifft ein Verfahren, mit den Verfahrensschritten: Wälzschleifen von Verzahnungen, wobei eine jeweilige Verzahnung mittels mehrerer Schleifhübe bearbeitet wird, wobei eine Einmittposition zur Positionierung eines Schleifwerkzeugs relativ zur jeweiligen Verzahnung für die Schleifhübe vorgegeben ist.

Beim Wälzschleifen wird eine Lückenmitte einer Verzahnung eines zu schleifenden Werkstücks z.B. durch ein Anschleifen der Verzahnung mittels der Schleifschnecke bestimmt. Dieser Vorgang wird als Einmitten bezeichnet, da das Finden der Lückenmitte der korrekten Positionierung des Schleifwerkzeugs relativ zur zu schleifenden Verzahnung dient. Alternativ kann das Finden der Lückenmitte mithilfe von Sensoren erfolgen, die auch als Einmittsensoren bezeichnet werden. Ein solches Verfahren, gemäß dem Oberbegriff von Anspruch 1, ist aus US 2022/291669 A1 bekannt.

Die Qualität des Einmittens, d.h. die Genauigkeit des Einmittens, hängt in der Serienproduktion von einer Mehrzahl von Einflussfaktoren ab, wie z.B. der Genauigkeit von Einmittsensoren, der Bauteilqualität und dergleichen. So können eine sich von Werkstück zu Werkstück unterscheidende Verteilung eines Teilungsfehlers der jeweiligen Verzahnungen, ein sich änderndes Aufmaß oder ähnlichen Abweichungen vorliegen, die einen großen Einfluss auf die Qualität des Einmittens haben.

Aus den Abweichungen beim Einmitten können Verzahnungsfehler, wie z.B. Welligkeiten, Formfehler oder einseitig geschliffene Verzahnungen resultieren.

Die immer weiter steigenden Anforderungen an die Qualität der jeweiligen geschliffen Verzahnungen, d.h. insbesondere die sehr engen geforderten Toleranzen, erfordern eine ebenso steigende Qualität für den Vorgang des Einmittens, der die Basis für das anschließende Wälzschleifen bildet.

Vor diesem Hintergrund liegt der vorliegenden Erfindung die technische Problemstellung zugrunde, ein verbessertes Verfahren der eingangs genannten Art anzugeben, welches insbesondere ein verbessertes Einmitten und weiter insbesondere eine Überwachung einer Qualität des Einmittens für das Wälzschleifen ermöglicht.

Die voranstehend beschriebene, technische Problemstellung wird mit den Merkmalen des unabhängigen Anspruchs gelöst. Weitere Ausgestaltungen der Erfindung ergeben sich aus den abhängigen Ansprüchen und der nachstehenden Beschreibung.

Erfindungsgemäß wird ein Verfahren angegeben, mit den Verfahrensschritten: Wälzschleifen von Verzahnungen, wobei eine jeweilige Verzahnung mittels mehrerer Schleifhübe bearbeitet wird und wobei eine Einmittposition zur Positionierung eines Schleifwerkzeugs relativ zur jeweiligen Verzahnung für die Schleifhübe vorgegeben ist. Das Verfahren ist gekennzeichnet durch Anpassen der Einmittposition anhand eines Leistungsparameters einer die jeweilige Verzahnung aufnehmenden Werkstückspindel.

Untersuchungen der Anmelderin haben gezeigt, dass Leistungsparameter der Werkstückspindel, wie z.B. dem Drehmoment oder der Stromaufnahme eines Antriebs der Werkstückspindel, mit der Genauigkeit des Einmittens korrelieren. Ist ein Schleifwerkzeug schlecht zur Verzahnung eingemittet, d.h. die Position der zu schleifenden Zahnlücken relativ zur Schleifschnecke ist nicht korrekt bestimmt worden, so ergeben sich während des Schleifens z.B. zu hohe oder zu niedrige im Bereich der Werkstückspindel abzustützende Drehmomente, da zu viel oder zu wenig Material abgetragen wird. Die Qualität des Einmittens ist daher an der Werkstückspindel messbar.

Anhand des Leistungsparameters der Werkstückspindel kann daher eine Korrektur bzw. Regelung der Einmittposition erfolgen.

Auf Grundlage des Leistungsparameters der Werkstückspindel können ein verbessertes Einmitten und eine Überwachung einer Qualität des Einmittens für das Wälzschleifen erreicht werden.

Der Begriff des "Einmittens" beschreibt das Positionieren des Schleifwerkzeugs, vorliegend einer Schnecke zum Wälzschleifen, relativ zu den zu bearbeitenden Zähnen einer zu schleifenden Verzahnung eines Werkstücks bzw. Bauteils. Nach dem Aufspannen der Verzahnung auf der Werkstückspindel ist die Position der Zähne innerhalb der Werkzeugmaschine bzw. deren relative Drehlage zunächst unbekannt. Die Position der des Gangs bzw. der Gänge der Schleifschnecke und die Drehlage der Schleifschnecke sind üblicherweise aus dem Abrichten oder aus einem vorhergehenden Schleifprozess bekannt. Dementsprechend muss die Position der Zähne des Werkstücks erfasst und eine Ausrichtung des Werkstücks relativ zur Schleifschnecke oder umgekehrt erfolgen, damit die Schleifschnecke zuverlässig und präzise mit der Verzahnung in Eingriff gebracht werden kann.

Der Begriff der Einmittposition beschreibt daher insbesondere Achspositionen einer Werkzeugmaschine, die anhand einer gemessenen Position der Zähne einer zu schleifenden Verzahnung zum Positionieren des Schleifwerkzeugs relativ zu den Zähnen der Verzahnung vorgegeben sind. Der Begriff des "Einmittens" und der "Einmittposition" sind im Stand der Technik hinlänglich bekannt und einem Fachmann der Verzahntechnik geläufig.

Wenn vorliegend vom Wälzschleifen von Verzahnungen gesprochen wird, so handelt es sich dabei insbesondere um das aufeinanderfolgende Wälzschleifen von verzahnten Bauteilen bzw. Werkstücken, die jeweils eine solche Verzahnung aufweisen.

Der Leistungsparameter kann während des Schleifens erfasst werden. Insbesondere kann der Leistungsparameter für jeden Schleifhub bzw. während jedes Schleifhubs erfasst werden.

Der Leistungsparameter kann ein Drehmoment eines Motors der Werkstückspindel sein. Das Drehmoment kann unmittelbar oder mittelbar, d.h. direkt oder indirekt gemessen werden.

Der Leistungsparameter kann eine Stromaufnahme des Motors der Werkstückspindel sein.

Das Wälzschleifen ist vorliegend insbesondere ein kontinuierliches Wälzschleifen, wobei das Schleifwerkzeug eine Schleifschnecke ist.

Die Schleifschnecke ist insbesondere eine abrichtbare Schleifschnecke. Die Schleifschnecke kann eingängig oder mehrgängig ausgeführt sein.

Das Wälzschleifen kann ein Schlichten, ein Schruppen oder ein Polieren sein.

Das Anpassen der Einmittposition kann ein Bestimmen eines Korrekturwerts zur Anpassung der Einmittposition aufweisen. Z.B. kann ein solcher Korrekturwert zu einem bestehenden Wert der Einmittposition addiert werden, davon subtrahiert werden oder ein Faktor sein. Es versteht sich, dass eine Mehrzahl von Korrekturwerten für die jeweiligen Maschinenachsen einer Mehrachsmaschine zum Verzahnungsschleifen angegeben werden können.

Die Verzahnung und das Schleifwerkzeug bzw. die Schleifschnecke führen beim kontinuierlichen Wälzschleifen eine gekoppelte Bewegung aus.

Dementsprechend kann eine Korrektur der Einmittposition z.B. dadurch erfolgen, dass eine relative Drehlage bzw. Winkellage der Verzahnung bezüglich der Rotationsachse der Verzahnung, gegenüber der Schleifschnecke korrigiert wird, in dem einer vorgegebenen Drehlage der Verzahnung ein Korrekturwert um die Rotationsachse der Verzahnung zugeordnet wird.

Alternativ oder ergänzend kann eine Korrektur der Einmittposition z.B. dadurch erfolgen, dass eine relative Drehlage bzw. Winkellage des Schleifwerkzeugs bezüglich der Rotationsachse des Werkzeugs gegenüber der Verzahnung korrigiert wird, in dem einer vorgegebenen Drehlage des Schleifwerkzeugs ein Korrekturwert um die Rotationsachse des Schleifwerkzeugs zugeordnet wird.

Alternativ oder ergänzend kann zur Korrektur der Einmittposition eine vorgegebene Position der Schleifschnecke entlang einer Werkzeugshiftrichtung parallel zur Werkzeugrotationsachse erfolgen, d.h. der Shiftposition der Schleifschnecke zur Verzahnung, erfolgen, in dem einer vorgegebenen Position der Schleifschnecke in Werkzeugshiftrichtung ein Korrekturwert zugeordnet wird.

Die Einmittposition kann daher insbesondere mittels einer Korrektur der Werkzeugdrehlage und/oder der Werkstückdrehlage und/oder der Werkzeugshiftposition erfolgen.

Je nach Maschinenbauart kann die Rotationsachse der Verzahung koaxial zu einer physischen CNC-gesteuerten Werkstückdrehachse der Werkstückspindel angeordnet sein. Das Vorgeben eines Korrekturwerts für die Drehlage des Werkstücks entspricht daher einer Korrektur einer Drehlage bzw. Winkelstellung der Verzahnung mittels der Werkstückspindel.

Je nach Maschinenbauart kann die Rotationsachse des Schleifwerkzeugs koaxial zu einer physischen CNC-gesteuerten Werkzeugdrehachse der Werkzeugspindel angeordnet sein. Das Vorgeben eines Korrekturwerts für die Drehlage des Werkzeugs entspricht daher einer Korrektur einer Drehlage bzw. Winkelstellung des Schleifwerkzeugs mittels der Werkzeugspindel.

Je nach Maschinenbauart kann die Shiftrichtung des Schleifwerkzeugs koaxial zu einer physischen CNC-gesteuerten Shiftachse angeordnet sein, die eine Linearachse ist. Das Vorgeben eines Korrekturwerts für die Shiftpostion des Werkzeugs entlang der Shiftrichtung entspricht daher einer Korrektur einer Position der Verzahnung mittels der Shiftachse.

Je nach Maschinenbauart kann die Korrektur der Einmittposition durch eine Überlagerung von Korrekturen mehrere Maschinenachsen erfolgen.

Die Einmittposition kann daher insbesondere mittels einer Korrektur der Werkzeugdrehachse und/oder der Werkstückdrehachse und/oder der Werkzeugshiftachse erfolgen. Je nach Maschinenbauart kann die Korrektur der Einmittposition durch eine Überlagerung von Korrekturen mehrere Maschinenachsen erfolgen.

Weiter kann eine Korrektur der Einmittposition z.B. dadurch erfolgen, dass eine Relativposition der Verzahnung mittels der Werkstückdrehachse gegenüber der Schleifschnecke korrigiert wird, in dem einer vorgegebenen Position der Verzahnung auf der Werkstückdrehachse ein Korrekturwert zugeordnet wird.

Alternativ oder ergänzend kann zur Korrektur der Einmittposition eine vorgegebene Position der Schleifschnecke mittels einer Werkzeugdrehachse, d.h. der Drehlage der Schleifschnecke zur Verzahnung, erfolgen, in dem einer vorgegebenen Position der Schleifschnecke auf der Werkzeugdrehachse ein Korrekturwert zugeordnet wird.

Alternativ oder ergänzend kann zur Korrektur der Einmittposition eine vorgegebene Position der Schleifschnecke mittels einer Werkzeugshiftachse, d.h. der Shiftposition der Schleifschnecke zur Verzahnung, erfolgen, in dem einer vorgegebenen Position der Schleifschnecke auf der Werkzeugshiftachse ein Korrekturwert zugeordnet wird.

Die Einmittposition kann daher insbesondere mittels einer Korrektur der Werkzeugdrehachse und/oder der Werkstückdrehachse und/oder der Werkzeugshiftachse erfolgen. Je nach Maschinenbauart kann die Korrektur der Einmittposition durch eine Überlagerung von Korrekturen mehrere Maschinenachsen erfolgen.

Eine Korrektur der Einmittposition kann am Teilkreis der jeweiligen Verzahnung in einer Richtung normal zur Zahnflanke bis zu 100 µm betragen, insbesondere bis zu 30 µm betragen. Mit anderen Worten kann ein fehlerhaftes Einmitten ohne eine Anwendung des erfindungsgemäßen Verfahrens dazu führen, dass beim Wälzschleifen in einer Richtung normal zur Zahnflanke betrachtet bis zu 100 µm zu viel oder zu wenig abgetragen werden.

Das Anpassen der Einmittposition kann einen Vergleich des Leistungsparameters mit mindestens einem Referenzparameter aufweisen.

Der Referenzparameter kann vor dem Wälzschleifen ermittelt worden sein.

Der Referenzparameter kann anhand der Bearbeitung eines Referenzwerkstücks ermittelt worden sein. Das Referenzwerkstück kann z.B. ein sehr genau gefertigtes Werkstück sein, das bezüglich des Aufmaßes und gemessener Verzahnungsabweichungen der zu schleifenden Verzahnung ein optimales Werkstück repräsentiert. Weiter kann zur Bestimmung der Referenz ein sehr genaues Einmitten erfolgen, um einen optimalen Schleifprozess bzw. einen Referenzprozess zu ermöglichen. Das Einmitten kann für den Referenzprozess insbesondere taktil durch Antasten der Zahnflanken des Referenzwerkstücks erfolgen. Der Referenzparameter kann einem Referenzdrehmoment entsprechen, das während des Schleifens des Referenzwerkstücks an der Werkstückspindel gemessen wird.

Der Referenzparameter kann einem Leerlaufdrehmoment der Werkstückspindel entsprechen. Untersuchungen der Anmelderin haben überraschend gezeigt, dass das an der Werkstückspindel gemessene Drehmoment während des Wälzschleifens für einer gut eingemitteten Verzahnung im Wesentlichen einem Leerlaufdrehmoment der Werkstückspindel entspricht.

Das Leerlaufdrehmoment kann gemessen werden, während die Werkstückspindel mit daran gehaltener Verzahnung mit der vorgesehenen Drehzahl des Wälzschleifens rotiert, ohne, dass das Schleifwerkzeug mit der Verzahnung im spanabhebenden Kontakt ist. Das Vorzeichen des an der Werkstückspindel gemessenen Leerlaufdrehmoments ergibt sich aus der vorgesehenen Drehrichtung der Werkstückspindel.

Es kann vorgesehen sein, dass ein Toleranzbereich für den Leistungsparameter der Werkstückspindel vorgegeben ist, wobei keine Anpassung der Einmittposition erfolgt, sofern sich der Leistungsparameter innerhalb des Toleranzbereichs befindet, und wobei eine Anpassung der Einmittposition erfolgt, sofern sich der Leistungsparameter außerhalb des Toleranzbereichs befindet.

Der Toleranzbereich kann anhand des Referenzparameters festgelegt worden sein. D.h. der Toleranzbereich kann z.B. anhand des gemessenen Referenzdrehmoments aus dem Referenzprozess und/oder anhand des gemessenen Leerlaufdrehmoments bestimmt werden. So kann z.B. eine prozentuale Abweichung von dem jeweiligen Referenzparameter vorgegeben sein, die den Toleranzbereich festlegt.

Für das Beispiel des Leerlaufdrehmoments als Referenzwert kann das gemessene Leerlaufdrehmoment für eine Bauteilrotation ohne Schleifkontakt z.B. 5 Newtonmeter (Nm) betragen. Als Toleranzbereich kann eine Abweichung von +/- 50 % des Leerlaufdrehmoments als zulässig definiert werden. Damit ergibt sich eine untere Schwelle des Toleranzbereichs zu 2,5 Nm und eine obere Schwelle zu 7,5 Nm. Es erfolgt für dieses Zahlenbeispiel keine Anpassung der Einmittposition, sofern das während des Wälzschleifens gemessene Drehmoment der Werkstückspindel größer oder gleich 2,5 Nm und kleiner oder gleich 7,5 Nm, und damit innerhalb des Toleranzbereichs ist. Es erfolgt für dieses Zahlenbeispiel eine Anpassung der Einmittposition, sofern das während des Wälzschleifens gemessene Drehmoment der Werkstückspindel kleiner 2,5 Nm oder größer 7,5 Nm ist und damit außerhalb des Toleranzbereichs ist.

Es versteht sich, dass die vorgenannten Werte lediglich beispielhaft zu verstehen sind und individuell für einen jeweiligen Verzahnprozess angepasst werden.

Es kann z.B. vorgesehen sein, dass für den Toleranzbereich ein modulabhängiger Korrekturwert berücksichtigt wird, um unterschiedlichen Bauteil- und Verzahnungsdimensionen Rechnung zu tragen.

Es kann z.B. vorgesehen sein, dass für den Toleranzbereich ein maschinenspezifischer Korrekturwert berücksichtigt wird, um unterschiedlichen Spindel- und Maschinenbauarten Rechnung zu tragen.

Gemäß einer Ausgestaltung des Verfahrens kann vorgesehen sein, dass ein Schwellwert für den Leistungsparameter vorgegeben ist, wobei keine Anpassung der Einmittposition erfolgt, sofern der Leistungsparameter den Schwellwert überschreitet, und wobei eine Anpassung der Einmittposition erfolgt, sofern der Leistungsparameter den Schwellwert überschreitet. Statt eines Toleranzbereichs kann daher z.B. lediglich ein Schwellwert für den Leistungsparameter festgelegt werden, anhand dessen eine Korrekturbedarf für die Einmittposition festgestellt wird.

Der Schwellwert kann anhand des Referenzparameters festgelegt worden sein. D.h. der Schwellwert kann z.B. anhand des gemessenen Referenzdrehmoments aus dem Referenzprozess und/oder anhand des gemessenen Leerlaufdrehmoments bestimmt werden. So kann z.B. eine prozentuale Abweichung von dem jeweiligen Referenzparameter vorgegeben sein, die den Schwellwert festlegt.

Für das Beispiel des Referenzdrehmoments als Referenzwert kann das gemessene Referenzdrehmoment im Schleifkontakt z.B. 5 Nm betragen. Als Schwellwert kann z.B. ein Wert von 10 Nm als zulässig definiert werden. Es erfolgt für dieses Zahlenbeispiel keine Anpassung der Einmittposition, sofern das während des Wälzschleifens gemessene Drehmoment der Werkstückspindel kleiner oder gleich 10 Nm ist und damit der Schwellwert, bzw. das Schwelldrehmoment, unterschritten wird. Es erfolgt für dieses Zahlenbeispiel eine Anpassung der Einmittposition, sofern das während des Wälzschleifens gemessene Drehmoment der Werkstückspindel größer 10 Nm ist und damit der Schwellwert, bzw. das Schwelldrehmoment, überschritten wird.

Der Zusammenhang zwischen dem gemessenen Leistungsparameter und der erforderlichen Korrektur der Einmittposition kann mithilfe von Versuchen empirisch ermittelt werden. So kann z.B. eine gemessene Abweichung eines Drehmoments beim Wälzschleifen zu einem Leerlaufdrehmoment unmittelbar in eine Korrektur einer Drehlage der Werkstückspindel umgerechnet werden. Z.B. können solche Versuche ergeben, dass, in Abhängigkeit von der Verzahnungsgeometrie, je 1 Nm Abweichung des Drehmoments beim Wälzschleifen zu einem Leerlaufdrehmoment z.B. eine Korrektur der Drehlage der Verzahnung auf der Werkstückspindel von 0,1 µrad (Mikrorad), oder 0,5 µrad oder 1 µrad erfolgen muss - soweit sich z.B. ein Annäherungsweise linearer Zusammenhang ergibt. Derartige Daten können z.B. formelmäßig oder tabellarisch in einer Maschinensteuerung hinterlegt sein. Die vorgenannten Werte sind wiederum exemplarisch zur Veranschaulichung zu verstehen.

Die Anpassung der Einmittposition kann zwischen den Schleifhüben zur Bearbeitung einer jeweiligen Verzahnung erfolgen, wobei insbesondere nach einem ersten Schleifhub eine Anpassung der Einmittposition vor einem zweiten Schleifhub für den zweiten Schleifhub und für nachfolgende Schleifhübe erfolgt.

Alternativ oder ergänzend kann vorgesehen sein, die Anpassung der Einmittposition während eines Schleifhubs erfolgt. So kann ggf. die Herstellung von Ausschuss vermieden werden.

Alternativ oder ergänzend kann vorgesehen sein, dass die Anpassung der Einmittposition nach dem Schleifen einer jeweiligen Verzahnung und vor dem Schleifen einer weiteren Verzahnung erfolgt.

Nach der Anpassung der Einmittposition kann eine Wiederholung des Schleifens derselben Verzahnung erfolgen, wobei insbesondere mindestens ein bereits durchgeführter Schleifhub erneut ausgeführt wird.

Nach der Anpassung der Einmittposition kann die Verzahnung als Ausschuss verworfen werden und die nächste Verzahnung mit der angepassten Einmittposition geschliffen werden.

Die Abweichungen beim Einmitten können durch verschiedene Einflüsse bedingt sein. Z.B. kann ein temperaturbedingter Drift durch das Erwärmen einer Maschine nach einem Kaltstart dazu führen, dass eine Einmittposition schrittweise angepasst werden sollte, um optimale Bearbeitungsergebnisse zu erzielen. Für diesen Fall kann vorgesehen sein, dass eine jeweilige korrigierte Einmittposition von Bauteil zu Bauteil bzw. von Verzahnung zu Verzahnung übergeben wird, um die Einmittposition dem Temperaturdrift schrittweise nachzuführen.

Für den Fall von Abweichungen beim Einmitten, die durch systematische Einflüsse bedingt sind, kann vorgesehen sein, dass eine angepasste Einmittposition einer ersten Verzahnung eines ersten Bauteils als vorgegebene Einmittposition für eine darauffolgend zu bearbeitende, zweite Verzahnung eines zweiten Bauteils definiert wird.

Soweit die Abweichungen beim Einmitten chaotisch, d.h. nicht systematisch sind, ist eine solche Übergabe der Korrekturen weniger sinnvoll. Hier sollte für jede Verzahnung individuell geprüft und korrigiert werden, so dass von Verzahnung zu Verzahnung bzw. von Bauteil zu Bauteil zunächst immer die gleiche Einmittposition als vorgegebene Einmittposition verwendet wird.

Vor dem Schleifen kann ein Einmitten des Schleifwerkzeugs für eine jeweilige Verzahnung mittels eines Sensors erfolgen.

Vor dem Schleifen kann ein Einmitten des Schleifwerkzeugs für eine jeweilige Verzahnung durch Anschleifen erfolgen.

Nachfolgend wird die Erfindung anhand einer Ausführungsbeispiele darstellenden Zeichnung näher beschrieben. Es zeigen jeweils schematisch:
- Fig. 1: eine Verzahnungsschleifmaschine;
- Fig. 2: eine Schleifschnecke mit einem verzahnten Werkstück;
- Fig. 3: Messwerte für eine zu korrigierende Einmittposition;
- Fig. 4: Messwerte für eine korrigierte Einmittposition;
- Fig. 5: Messwerte für eine zu korrigierende Einmittposition;
- Fig. 6: Messwerte für eine korrigierte Einmittposition;
- Fig. 7: einen Ablaufplan eines erfindungsgemäßen Verfahrens;
- Fig. 8: Messwerte für eine zu korrigierende Einmittposition;
- Fig. 9: Messwerte für eine zu korrigierende Einmittposition.

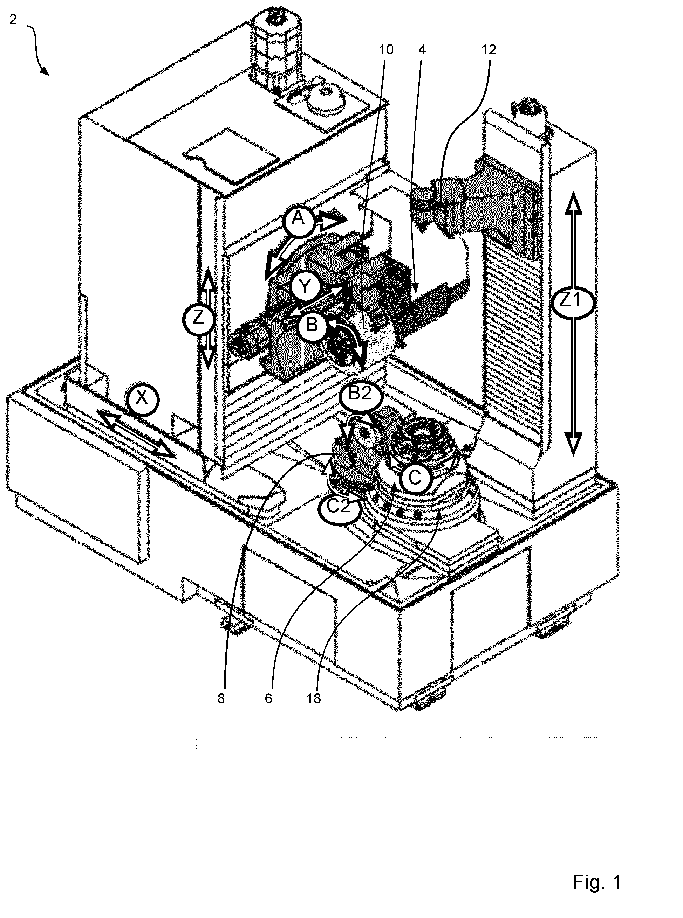

Fig. 1 zeigt eine Verzahnungsschleifmaschine 2. Die Verzahnungsschleifmaschine 2 hat eine Werkzeugspindel 4 zum Halten und Drehantreiben eines Schleifwerkzeugs 10. Die Verzahnungsschleifmaschine 2 hat eine Werkstückspindel 6 zum Halten und Drehantreiben eines zu schleifenden, verzahnten Bauteils. Die Verzahnungsschleifmaschine 2 hat eine Abrichtvorrichtung 8 zum Abrichten von Schleifwerkzeugen.

Die Verzahnungsschleifmaschine 2 hat numerisch gesteuerte Maschinenachsen X, Y, Z, A, B, C, C2, B2 zum Ausführen von translatorischen und rotatorischen Relativbewegungen, um beim Verzahnen oder Abrichten die geforderte Bearbeitungskinematik bereitzustellen. Weiter hat die Verzahnungsschleifmaschine 2 eine Achse Z1 mit einer verschiebbaren Pinole 12 zum Spannen von Wellen oder Spanndornen.

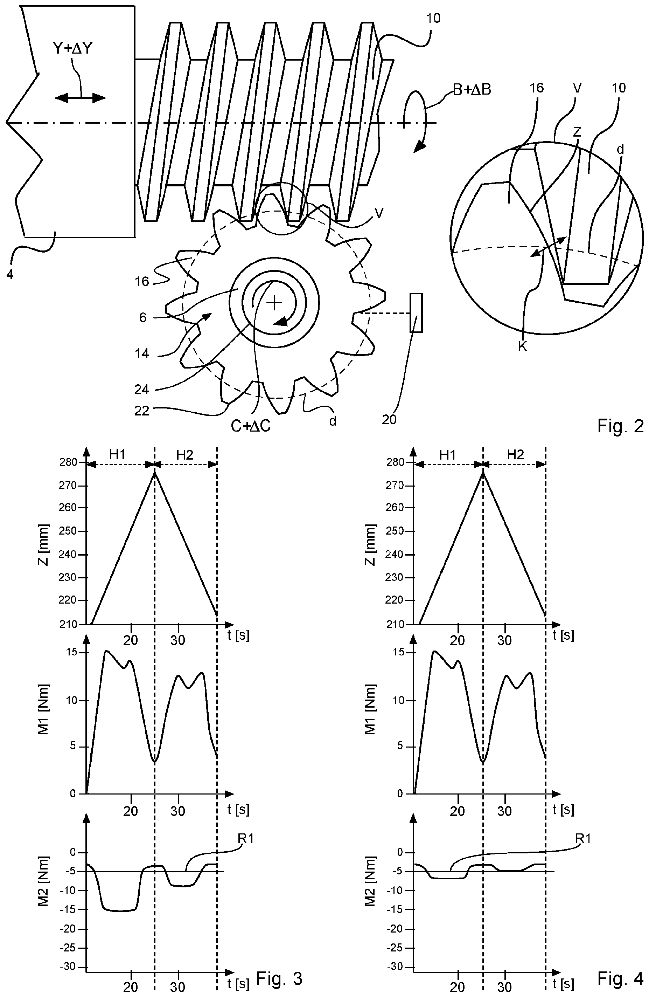

Ein Werkstück 14, das eine zu schleifende Verzahnung 16 aufweist, ist an der Werkstückspindel 6 gehalten (Fig. 2). Die Werkstückspindel 6 hat einen Antrieb 18 bzw. Motor 18, zum Drehantreiben des Werkstücks 14 um seine Längsachse (Fig. 1).

Die Verzahnungsschleifmaschine 2 hat einen berührungslos arbeitenden, induktiven Einmittsensor 20 zur Erfassung der Position von Zahnköpfen 22 der Verzahnung 16 (Fig. 2). Die Darstellung des Einmittsensors 20 ist, wie auch die weiteren Figuren, schematisch.

Der Werkstückspindel 6 ist ein Drehmomentsensor 24 zur Erfassung des Drehmoments der Werkstückspindel 6 zugeordnet. Die Erfassung des Drehmoments kann auch ohne Drehmomentsensor innerhalb einer Steuerung erfolgen, wobei das Drehmoment anhand von Betriebsdaten des Antriebs 18 berechnet wird.

Erfindungsgemäß wird ein Verfahren durchgeführt, mit den Verfahrensschritten:
(A) Wälzschleifen von Verzahnungen, wobei eine jeweilige Verzahnung 16 mittels mehrerer Schleifhübe bearbeitet wird und wobei eine Einmittposition zur Positionierung eines Schleifwerkzeugs 10 relativ zur jeweiligen Verzahnung 16 für die Schleifhübe vorgegeben ist; und
(B) Anpassen der Einmittposition anhand eines Leistungsparameters der die jeweilige Verzahnung 16 aufnehmenden Werkstückspindel 6.

Das Schleifwerkzeug 10 ist eine abrichtbare Schleifschnecke.

Der Leistungsparameter wird während des Schleifens gemessen.

Nachfolgend wird das erfindungsgemäße Verfahren anhand der Diagramme der Figuren 3 und 4 näher beschrieben.

Fig. 3 zeigt einen Hubweg Z [mm], ein Drehmoment M1 [Nm] der Werkzeugspindel 4 und ein Drehmoment M2 [Nm] der Werkstückspindel 6, jeweils aufgetragen über einer Zeitachse t [s].

Der Bereich H1 beschreibt einen ersten Schleifhub und der Bereich H2 beschreibt einen zweiten Schleifhub H2, den die Schleifschnecke 10 zur wälzschleifenden Bearbeitung der Verzahnung 16 ausführt. Der Schleifhub H1 erfolgt im Gleichlauf. Der Schleifhub H2 erfolgt im Gegenlauf. Im Schleifhub H1 wird ein Aufmaß von ca. 60 µm abgetragen. Im Schleifhub H2 wird ein Aufmaß von ca. 35 µm abgetragen.

Der gemessene Leistungsparameter zur Anpassung der Einmittposition ist vorliegend das Drehmoment M2 des Motors 18 der Werkstückspindel 6.

Das während des Wälzschleifens gemessene Drehmoment M2 der Werkstückspindel 6 weicht vorliegend deutlich von einem Leerlaufdrehmoment der Werkstückspindel 6 ab. Das Leerlaufdrehmoment der Werkstückspindel 6 bildet vorliegend einen Referenzparameter R1 für das gemessene Drehmoment M2 der Werkstückspindel 6.

Das Leerlaufdrehmoment beträgt -5 Nm. Das negative Vorzeichen ergibt sich aus der Drehrichtung der Werkstückspindel 6.

Aufgrund der starken Abweichung des gemessenen Drehmoments M2 der Werkstückspindel 6 von dem Leerlaufdrehmoment R1, wird eine Anpassung der Einmittposition durchgeführt. Denn für den ersten Hub H1 und für den zweiten Hub H2 wird deutlich zu viel Material von linken Flanken der Verzahnung 16 angenommen - was sich aus dem erhöhten Drehmoment ableiten lässt.

Das Anpassen der Einmittposition erfolgt dadurch, dass eine Relativposition des Schleifwerkzeugs 10 zur zu schleifenden Verzahnung 16 verändert wird, in dem den Achspositionen einer oder mehrere Korrekturwerte ΔB, ΔC, ΔY zugeordnet werden. Im einfachsten Fall wird z.B. lediglich die Drehlage C des Werkstücks 14 korrigiert, in dem die nunmehr die Position C+ΔC angefahren wird. Diese Korrektur kann gleichermaßen für die Shiftrichtung gemäß der Shiftachse Y und/oder die Drehlage des Werkzeugs gemäß der Werkzeugdrehachse B durchgeführt werden.

Im vorliegenden Beispiel ist die Shiftrichtung parallel zum linearen Freiheitsgrad der Shiftachse Y orientiert bzw. die Shiftrichtung verläuft parallel zurm linearen Verfahrweg der Shiftachse. Weiter die Rotationsachse des Werkstücks koaxial zur Rotationsachse C der Werkstückspindel orientiert und die Rotationsachse des Werkzeugs ist koxial zur Rotationsachse B der Werkzeugspindel orientiert.

Für ein nachfolgendes, weiteres zu schleifendes Bauteil 14 wird daher die in dieser Weise korrigierte Einmittposition eingestellt, für die die Verzahnung 16 des weiteren Bauteils nunmehr z.B. gemäß dem Korrekturwert ΔC um wenige Mikrorad im Uhrzeigersinn rotiert worden ist, um die Einmittposition zu verbessern. So kann eine Korrektur K der Einmittposition am Teilkreis d der jeweiligen Verzahnung 16 in einer Richtung normal zur jeweiligen Zahnflanke Z erreicht werden, die bis zu 30 µm oder bis zu 100 µm beträgt. Dies ist in einer vergrößerten Darstellung V des Eingriffs von Werkzeug 10 und Werkstück 14 gemäß Fig. 2 gezeigt.

Das Ergebnis dieser Korrektur ist in Fig. 4 dargestellt. Das beim Schleifen der Verzahnung 16 des nachfolgenden Bauteils 14 gemessene Drehmoment M2 befindet sich nunmehr für beide Schleifhübe H1, H2 deutlich näher am Leerlaufdrehmoment von -5 Nm, so dass von einem guten Einmitten ausgegangen werden kann.

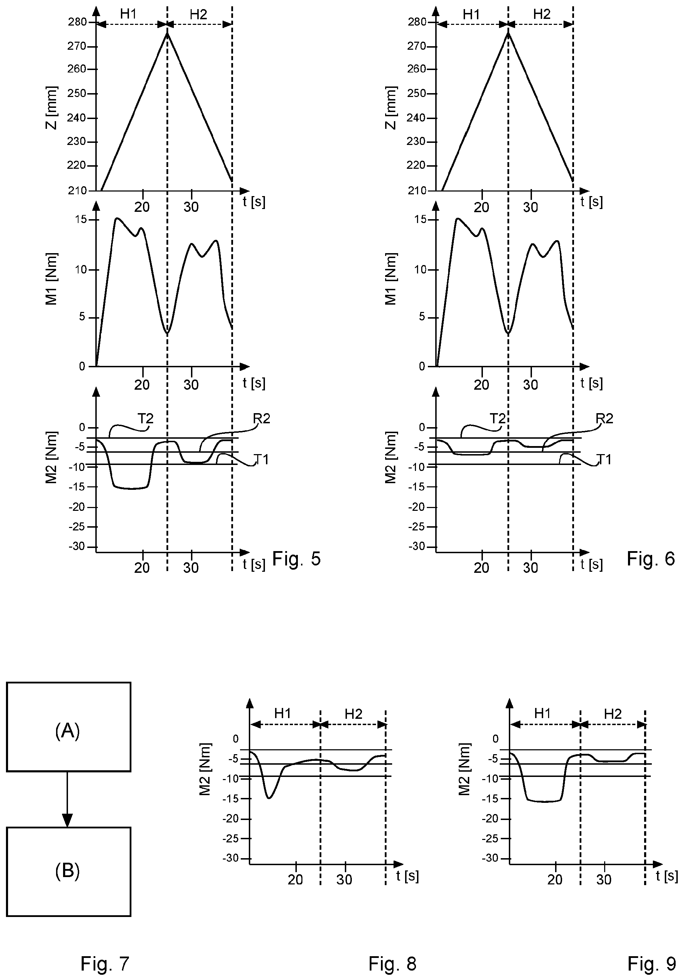

Die Diagramme zeigen schematisch gemittelte und geglättete Werte für die Drehmomente M1 und M2. So ist der Verlauf der Drehmomente M2 für Fig. 3 und Fig. 4 in Realität nicht genau identisch, sondern lediglich bezüglich des gemittelten Verlaufs näherungsweise gleich. Insbesondere wird nach der Korrektor eine Schwankung des Drehmoments M2 um den gezeigten mittleren Verlauf reduziert. Dies gilt gleichermaßen für die Figuren 5 und 6.

Anstelle des Leerlaufdrehmoments R1 kann ein Referenzparameter R2 anhand der Bearbeitung eines Referenzwerkstücks ermittelt worden sein.

Das Referenzwerkstück entspricht dabei einem der zu bearbeitenden Bauteile 14, wobei dieses als Referenzwerkstück verwendete Bauteil besonders geringe Abweichungen zu vorgegebenen Toleranzen aufweist und besonders genau eingemittet wird. Während der schleifenden Bearbeitung der Verzahnung 16 dieses Referenzwerkstücks wird ein Referenzdrehmoment R2 ermittelt, das z.B. -6 Nm beträgt (Fig. 5).

Bezüglich des Referenzdrehmoments R2 wird ein Toleranzbereich T1 - T2 definiert, mit einer ersten Schwelle T1 und einer zweiten Schwelle T2.

Gemäß Fig. 5 ist eine Anpassung der Einmittposition erforderlich, da sich der Leistungsparameter M2 außerhalb des Toleranzbereichs T1 - T2 befindet. Gemäß Fig. 6 ist die Einmittposition für die darauffolgende zu schleifende Verzahnung 16 bzw. das darauffolgende zu schleifende Bauteil 14 korrigiert worden, wobei sich der Leistungsparameter M2 nunmehr innerhalb des Toleranzbereichs T1 - T2 befindet.

Statt der Verwendung des Toleranzbereichs T1 - T2 kann auch lediglich die Schwelle T1 als Schwellwert berücksichtigt werden, so dass T2 wegfallen kann.

Fig. 8 zeigt eine Ausgestaltung des Verfahrens, wobei bereits während des ersten Schleifhubs H1 eine Korrektur der Einmittposition erfolgt.

Fig. 9 zeigt eine Ausgestaltung des Verfahrens, wobei nach dem ersten Schleifhub H1 eine Korrektur der Einmittposition erfolgt, so dass der zweite Schleifhub H2 mit einer korrigierten Einmittposition durchgeführt wird.

## Patentansprüche

1. Verfahren, mit den Verfahrensschritten:
Wälzschleifen von Verzahnungen (16), wobei eine jeweilige Verzahnung (16) mittels mehrerer Schleifhübe bearbeitet wird und wobei eine Einmittposition zur Positionierung eines Schleifwerkzeugs (10) relativ zur jeweiligen Verzahnung (16) für die Schleifhübe vorgegeben ist,
**gekennzeichnet durch**
Anpassen der Einmittposition anhand eines Leistungsparameters (M2) einer die jeweilige Verzahnung (16) aufnehmenden Werkstückspindel (6).

2. Verfahren nach Anspruch 1,
**dadurch gekennzeichnet, dass**
der Leistungsparameter (M2) während des Schleifens gemessen wird.

3. Verfahren nach einem der voranstehenden Ansprüche,
**dadurch gekennzeichnet, dass**
der Leistungsparameter (M2) ein Drehmoment (M2) eines Motors (18) der Werkstückspindel (6) ist
oder
der Leistungsparameter eine Stromaufnahme des Motors (18) der Werkstückspindel (6) ist.

4. Verfahren nach einem der voranstehenden Ansprüche,
**dadurch gekennzeichnet, dass**
das Anpassen der Einmittposition ein Bestimmen eines Korrekturwerts (ΔB, ΔC, ΔY) zur Anpassung der Einmittposition aufweist
und/oder
eine Korrektur der Einmittposition am Teilkreis der jeweiligen Verzahnung (16) in einer Richtung normal zur Zahnflanke bis zu 100 µm beträgt, insbesondere bis zu 30 µm beträgt.

5. Verfahren nach einem der voranstehenden Ansprüche,
**dadurch gekennzeichnet, dass**
das Anpassen der Einmittposition einen Vergleich des Leistungsparameters (M2) mit mindestens einem Referenzparameter (R1, R2 ) aufweist.

6. Verfahren nach Anspruch 5,
**dadurch gekennzeichnet, dass**
der Referenzparameter (R1, R2) vor dem Wälzschleifen ermittelt worden ist.

7. Verfahren nach Anspruch 5 oder Anspruch 6,
**dadurch gekennzeichnet, dass**
der Referenzparameter (R2) anhand der Bearbeitung eines Referenzwerkstücks (14) ermittelt worden ist.

8. Verfahren nach Anspruch 5 oder Anspruch 6,
der Referenzparameter (R1) einem Leerlaufdrehmoment der Werkstückspindel (6) entspricht.

9. Verfahren einem der voranstehenden Ansprüche,
**dadurch gekennzeichnet, dass**
ein Toleranzbereich (T1 - T2) für den Leistungsparameter (M2) vorgegeben ist, wobei keine Anpassung der Einmittposition erfolgt, sofern sich der Leistungsparameter (M2) innerhalb des Toleranzbereichs befindet, und wobei eine Anpassung der Einmittposition erfolgt, sofern sich der Leistungsparameter außerhalb des Toleranzbereichs befindet.

10. Verfahren nach Anspruch 9 und nach einem der Ansprüche 5 - 9,
**dadurch gekennzeichnet, dass**
der Toleranzbereich (T1 - T2) anhand des Referenzparameters (R1, R2) festgelegt worden ist.

11. Verfahren einem der Ansprüche 5 - 9,
**dadurch gekennzeichnet, dass**
ein Schwellwert (T1, T2) für den Leistungsparameter (M2) vorgegeben ist, wobei keine Anpassung der Einmittposition erfolgt, sofern der Leistungsparameter (M2) den Schwellwert (T1, T2) überschreitet, und wobei eine Anpassung der Einmittposition erfolgt, sofern der Leistungsparameter (M2) den Schwellwert (T1, T2) überschreitet, wobei der Schwellwert (T1, T2) anhand des Referenzparameters (R1, R2) festgelegt worden ist.

12. Verfahren nach einem der voranstehenden Ansprüche,
**dadurch gekennzeichnet, dass**
die Anpassung der Einmittposition zwischen den Schleifhüben zur Bearbeitung einer jeweiligen Verzahnung erfolgt, wobei insbesondere nach einem ersten Schleifhub eine Anpassung der Einmittposition vor einem zweiten Schleifhub für den zweiten Schleifhub und für nachfolgende Schleifhübe erfolgt
und/oder
die Anpassung der Einmittposition während eines Schleifhubs erfolgt
und/oder
die Anpassung der Einmittposition nach dem Schleifen einer jeweiligen Verzahnung und vor dem Schleifen einer weiteren Verzahnung erfolgt.

13. Verfahren nach einem der voranstehenden Ansprüche,
**dadurch gekennzeichnet, dass**
nach der Anpassung der Einmittposition eine Wiederholung des Schleifens der jeweiligen Verzahnung erfolgt, wobei insbesondere mindestens ein bereits durchgeführter Schleifhub erneut ausgeführt wird.

14. Verfahren nach einem der voranstehenden Ansprüche,
**dadurch gekennzeichnet, dass**
nach der Anpassung der Einmittposition die Verzahnung als Ausschuss verworfen wird und die nächste Verzahnung mit der angepasste Einmittposition geschliffen wird.

15. Verfahren nach einem der voranstehenden Ansprüche,
**dadurch gekennzeichnet, dass**
vor dem Schleifen ein Einmitten des Schleifwerkzeugs (10) für eine jeweilige Verzahnung (16) mittels eines Sensors (20) erfolgt
und/oder
vor dem Schleifen ein Einmitten des Schleifwerkzeugs (10) für eine jeweilige Verzahnung (16) durch Anschleifen erfolgt.

## Claims

1. Method, having the method steps of:
generating grinding of toothings (16), wherein a respective toothing (16) is machined by means of a plurality of grinding strokes and wherein a centering position for positioning a grinding tool (10) relative to the respective toothing (16) is predetermined for the grinding strokes,
**characterized by**
adapting the centering position on the basis of a performance parameter (M2) of a workpiece spindle (6) accommodating the respective toothing (16).

2. Method according to claim 1, **characterized in that** the performance parameter (M2) is measured during grinding.

3. Method according to one of the preceding claims,
**characterized in that**
the performance parameter (M2) is a torque (M2) of a motor (18) of the workpiece spindle (6)
or
the performance parameter is a current consumption of the motor (18) of the workpiece spindle (6).

4. Method according to one of the preceding claims,
**characterized in that**
the adjustment of the centering position comprises a determination of a correction value (ΔB, ΔC, ΔY) for adjusting the centering position
and/or
a correction of the centering position on the pitch circle of the respective toothing (16) in a direction normal to the tooth flank is up to 100 µm, in particular up to 30 µm.

5. Method according to one of the preceding claims,
**characterized in that**
the adjustment of the centering position comprises a comparison of the performance parameter (M2) with at least one reference parameter (R1, R2).

6. Method according to claim 5,
**characterized in that**
the reference parameter (R1, R2) has been determined before generating grinding.

7. Method according to claim 5 or claim 6,
**characterized in that**
the reference parameter (R2) has been determined on the basis of the machining of a reference workpiece (14).

8. Method according to claim 5 or claim 6,
the reference parameter (R1) corresponds to an idle torque of the workpiece spindle (6).

9. Method according to one of the preceding claims,
**characterized in that**
a tolerance range (T1-T2) is specified for the performance parameter (M2), wherein no adjustment of the centering position is made if the performance parameter (M2) is within the tolerance range, and wherein an adjustment of the centering position is made if the performance parameter is outside the tolerance range.

10. Method according to claim 9 and according to one of claims 5-9,
**characterized in that**
the tolerance range (T1-T2) has been determined on the basis of the reference parameter (R1, R2).

11. Method according to one of claims 5-9,
**characterized in that**
a threshold value (T1, T2) is specified for the performance parameter (M2), wherein no adjustment of the centering position is made if the performance parameter (M2) exceeds the threshold value (T1, T2), and wherein an adjustment of the centering position is made if the performance parameter (M2) exceeds the threshold value (T1, T2), wherein the threshold value (T1, T2) has been determined on the basis of the reference parameter (R1, R2).

12. Method according to one of the preceding claims,
**characterized in that**
the adjustment of the centering position takes place between the grinding strokes for machining a respective toothing, wherein in particular after a first grinding stroke an adjustment of the centering position takes place before a second grinding stroke for the second grinding stroke and for subsequent grinding strokes
and/or
the adjustment of the centering position takes place during a grinding stroke
and/or
the adjustment of the centering position takes place after the grinding of a respective toothing and before the grinding of a further toothing.

13. Method according to one of the preceding claims,
**characterized in that**
the grinding of the respective toothing is repeated after the adjustment of the centering position, wherein in particular at least one grinding stroke that has already been performed is carried out again.

14. Method according to one of the preceding claims,
**characterized in that**
after the adjustment of the centering position, the toothing is discarded as scrap and the next toothing is ground with the adjusted centering position.

15. Method according to one of the preceding claims,
**characterized in that**
before grinding, a centering of the grinding tool (10) is carried out for a respective toothing (16) by means of a sensor (20) and/or
before grinding, a centering of the grinding tool (10) is carried out for a respective toothing (16) by whetting.

## Revendications

1. Procédé comprenant les étapes suivantes :
rectification par génération d'engrenages (16), un engrenage (16) respectif étant usiné au moyen de plusieurs courses de rectification et une position centrale étant prédéfinie pour le positionnement d'un outil de rectification (10) par rapport à l'engrenage (16) respectif pour les courses de rectification,
**caractérisé par**
l'ajustement de la position centrale à l'aide d'un paramètre de puissance (M2) d'une broche porte-pièce (6) recevant la denture respective (16).

2. Procédé selon la revendication 1,
**caractérisé en ce que**
le paramètre de puissance (M2) est mesuré pendant la rectification.

3. Procédé selon l'une des revendications précédentes,
**caractérisé en ce que**
le paramètre de puissance (M2) est un couple (M2) d'un moteur (18) de la broche porte-pièce (6) ou le paramètre de puissance est une consommation de courant du moteur (18) de la broche porte-pièce (6).

4. Procédé selon l'une des revendications précédentes,
**caractérisé en ce que**
l'ajustement de la position centrale comprend la détermination d'une valeur de correction (DB, DC, DY) pour ajuster la position centrale
et/ou
une correction de la position centrale sur le cercle primitif de la denture respective (16) dans une direction normale au flanc de dent s'élève à 100 um, en particulier à 30 µm.

5. Procédé selon l'une des revendications précédentes,
**caractérisé en ce que**
l'ajustement de la position centrale comprend une comparaison du paramètre de performance (M2) avec au moins un paramètre de référence (R1, R2).

6. Procédé selon la revendication 5,
**caractérisé en ce que**
le paramètre de référence (R1, R2) a été déterminé avant la rectification par génération.

7. Procédé selon la revendication 5 ou la revendication 6,
**caractérisé en ce que**
le paramètre de référence (R2) a été déterminé à partir de l'usinage d'une pièce de référence (14).

8. Procédé selon la revendication 5 ou la revendication 6,
le paramètre de référence (R1) correspondant à un couple à vide de la broche porte-pièce (6).

9. Procédé selon l'une des revendications précédentes,
**caractérisé en ce qu'**
une plage de tolérance (T1 - T2) est prédéfinie pour le paramètre de puissance (M2), aucun ajustement de la position centrale n'étant effectué si le paramètre de puissance (M2) se trouve dans la plage de tolérance, et un ajustement de la position centrale étant effectué si le paramètre de puissance se trouve en dehors de la plage de tolérance.

10. Procédé selon la revendication 9 et selon l'une des revendications 5 à 9,
**caractérisé en ce que**
la plage de tolérance (T1 - T2) a été définie à l'aide du paramètre de référence (R1, R2).

11. Procédé selon l'une des revendications 5 à 9,
**caractérisé en ce qu'**
une valeur seuil (T1, T2) est prédéfinie pour le paramètre de puissance (M2), aucun ajustement de la position centrale n'étant effectué si le paramètre de puissance (M2) dépasse la valeur seuil (T1, T2), et un ajustement de la position centrale est effectué si le paramètre de puissance (M2) dépasse la valeur seuil (T1, T2), la valeur seuil (T1, T2) ayant été déterminée à l'aide du paramètre de référence (R1, R2).

12. Procédé selon l'une des revendications précédentes,
**caractérisé en ce que**
l'ajustement de la position centrale entre les courses de rectification pour l'usinage d'une denture respective est effectué, en particulier après une première course de rectification, un ajustement de la position centrale étant effectué avant une deuxième course de rectification pour la deuxième course de rectification et pour les courses de rectification suivantes
et/ou
l'ajustement de la position centrale est effectué pendant une course de rectification
et/ou
l'ajustement de la position centrale est effectué après la rectification d'une denture respective et avant la rectification d'une autre denture.

13. Procédé selon l'une des revendications précédentes,
**caractérisé en ce que**
après l'ajustement de la position centrale, une répétition de la rectification de la denture respective est effectuée, au moins une course de rectification déjà effectuée étant notamment exécutée à nouveau.

14. Procédé selon l'une des revendications précédentes,
**caractérisé en ce que**
après l'ajustement de la position centrale, la denture est rejetée comme défectueuse et la denture suivante est rectifiée avec la position centrale ajustée.

15. Procédé selon l'une des revendications précédentes,
**caractérisé en ce que**,
avant la rectification, un centrage de l'outil de rectification (10) pour une denture respective (16) est effectué à l'aide d'un capteur (20)
et/ou
avant la rectification, un centrage de l'outil de rectification (10) pour une denture respective (16) est effectué par rectification.
